# NEUE EUROPÄISCHE PATENTSCHRIFT

(11) **EP 3 500 833 B2**
(45) Veröffentlichungstag und Bekanntmachung des Hinweises auf die Entscheidung über den Einspruch: **08.04.2026**
(45) Hinweis auf die Patenterteilung: 03.06.2020
(21) Anmeldenummer: 18719739.7
(22) Anmeldetag: 23.02.2018
(51) Int. Cl.: G01M 3/20, G01M 3/22, G01M 3/02

(54) **VERFAHREN ZUM ÜBERPRÜFEN EINER DICHTHEIT EINES FLEXIBLEN BEHÄLTERS**
METHOD FOR INSPECTING A SEAL OF A FLEXIBLE CONTAINER
PROCÉDÉ DE CONTRÔLE DE L'ÉTANCHÉITÉ D'UN RÉCIPIENT FLEXIBLE

(30) Priorität: 24.02.2017 AT 600142017; 12.05.2017 AT 504082017
(43) Veröffentlichungstag der Anmeldung: 26.06.2019
(73) Patentinhaber: Single Use Support GmbH, 6330 Kufstein (AT)
(72) Erfinder: WURM, Thomas, 6275 Stumm (AT)
(74) Vertreter: Torggler & Hofmann Patentanwälte - Innsbruck
(86) Internationale Anmeldenummer: PCT/AT2018/060050
(87) Internationale Veröffentlichungsnummer: WO 2018/152561

(56) Entgegenhaltungen:
- DE-A1- 102011 106 165
- DE-U1- 202014 010 756
- JP-A- S62 112 027
- US-A1- 2012 128 275
- US-B2- 8 910 509

## Beschreibung

Die vorliegende Erfindung betrifft ein Verfahren zum Überprüfen einer Dichtheit eines flexiblen Behälters für ein Fluid, insbesondere für ein fluides Arzneimittel.

Solche flexiblen Behälter für fluide Arzneimittel können beispielsweise als sogenannte Single-Use-Bags eingesetzt werden, um sehr hochwertige, flüssige Biopharmazeutika zu lagern und zu transportieren.

Diese Behälter auf Dichtheit zu überprüfen ist eine technische Herausforderung, insbesondere, da zwischen Produktion der Behälter und deren Verwendung mehrere Einwirkungen auf den Behälter stattfinden, die Lecks bzw. Löcher und dergleichen verursachen können. Solche Einwirkungen können zum Beispiel durch Verpackung, Sterilisierung (beispielsweise mittels Gammastrahlung), Transport, Lagerung, Auspacken sowie insgesamt händische Manipulation und dergleichen auftreten.

Es hat sich daher im Stand der Technik ein zweistufiges Überprüfungsverfahren etabliert, bei dem zunächst am Ort der Herstellung des Behälters eine genaue Überprüfung durchgeführt wird und zum Zweiten direkt vor Verwendung (am "point of use") eine weitere Überprüfung durchgeführt wird.

Die Überprüfung am Herstellungsort funktioniert so, dass in den Behälter Helium eingeleitet wird. Dabei ist zu bemerken, dass dies wirklich nur für den Behälter selbst gilt. Etwaige Schläuche, Verbinder, Filter und dergleichen werden nicht mitgetestet. Der mit Helium befüllte Behälter ist in einer Vakuumkammer angeordnet. Durch Evakuieren der Vakuumkammer und der Detektion von in der Vakuumkammer vorhandenem Helium, das durch etwaige Leckage aus dem Behälter ausgetreten ist, kann auf die Dichtheit oder das Vorhandensein eines Lecks geschlossen werden. Diese Messung ist hochsensitiv. Es können Lecks mit Größen von weniger als 5 µm entdeckt werden. Allerdings wird das Behältnis gleichzeitig stark belastet, da durch die Beaufschlagung mit Helium ein ballonartiges Entfalten und Aufblähen des Behälters stattfindet. Mit dieser Methode des Standes der Technik ist eine größere Genauigkeit am Ort der Verwendung jedoch nicht zu erreichen, da entsprechende Vorrichtungen für Hochvakuum und dergleichen nicht ohne weiteres zur Verfügung stehen. Ein dazu ähnliches Verfahren ist in der US 8,910,509 B2 oder der DE 20 2014 010 756 U1 offenbart.

Lecks, die erst entstehen, nachdem diese Überprüfung am Herstellungsort durchgeführt wurde, können auf diese Art natürlich nicht entdeckt werden.

Direkt am Ort der Verwendung ("point of use") wird, wie angesprochen, ebenfalls eine Überprüfung durchgeführt. Dabei wird der Behälter mit einem relativ geringen Druck beaufschlagt (ca. 30 Millibar) und etwa eine halbe Stunde überwacht. Aus der Druckentwicklung kann auf das Entweichen eines Gases aus dem Behälter geschlossen werden. Wenn dies in zu großem Maße der Fall ist, kann auf ein Leck geschlossen werden. Mit dieser Methode können allerdings Lecks, die eine Größe von 20 µm oder kleiner aufweisen, nicht entdeckt werden.

Das im Stand der Technik am Herstellungsort der Behälter durchgeführte Verfahren auch am Verwendungsort durchzuführen ist nicht praktikabel, da die (industriellen) Anlagen, wie Volumenkammer und Bereitstellung von Helium, dort nur sehr schwer bereitgestellt werden können.

Die Sensitivität auf Lecks mit seiner Größe von mehr als 20 µm am Ort der Verwendung ist jedoch letztendlich nicht ausreichend, da davon auszugehen ist, dass bereits Löcher über 3 bis 5 µm zu Unsterilität im Inneren des Behälters führen können (sogenannter "bacterial ingress"). Kurz ausgedrückt, ermöglicht eine Lochgröße von über 3 bis 5 µm das Eindringen von Bakterien in das Innere des Behälters.

Die US 2012/0128275 A1 offenbart einen Behälter für ein biopharmazeutisches Produkt, wobei der Detektor zum Erfassen des Tracer-Gases integriert ist. Die angesprochenen erforderlichen Genauigkeiten lassen sich mit einem solchen integrierten, auf einem Farbwechsel basierenden Detektor nicht erreichen.

Die JPS62112027 offenbart Verfahren zur Dichtheitsprüfung stabiler Behälter, wie Druckbehälter und Benzintanks.

Aufgabe der Erfindung ist es daher, ein Verfahren bereitzustellen, das es erlaubt, die Gefahr von Unsterilität eines flexiblen Behälters für fluide Arzneimittel und ähnliche Produkte, bspw. aus dem pharmazeutischen Produktionsprozess, zu reduzieren.

Diese Aufgabe wird mit den Merkmalen des Anspruchs 1 gelöst.

Gemäß der Erfindung bestehen die flexiblen Behälter aus zwei randseitig verschweißten Kunststofflagen - insbesondere Kunststofffolien - , die flexibel sind ("flexible wall").

Durch die Verwendung einer gasdurchlässigen Lage und eines zusätzlichen, im Wesentlichen gasdichten Beutels, kann die im Stand der Technik verwendete Vakuumkammer aus dem Verfahren eliminiert werden. Dies hat zum einen den Vorteil, dass aufwändige Messapparaturen, wie sie in Verbindung mit der Überprüfung am Herstellungsort beim Stand der Technik beschrieben wurden, nicht mehr nötig sind. Gleichzeitig wird das Aufblähen des Behälters verhindert und dadurch auch das Einführen neuer Beschädigungen, insbesondere Leckagen, verhindert.

Denn durch das Evakuieren des Zwischenraums zwischen dem zu überprüfenden Behälter und des im Wesentlichen gasdichten Beutels wirkt letztendlich noch der Umgebungsdruck (über den im Wesentlichen gasdichten Beutel und die gasdurchlässige Lage) auf den flexiblen Behälter von außen.

Die gasdurchlässige Lage erlaubt auch im evakuierten Zustand des Zwischenraums zwischen dem flexiblen Behälter und dem im Wesentlichen gasdichten Beutel die Migration von Helium, welches über ein Leck aus dem Behälter austritt, durch Abpumpen aus dem im Wesentlichen gasdichten Beutel zu einer Detektionsvorrichtung.

Als gasdurchlässige Lage kann vorzugsweise ein Vlies oder dergleichen zum Einsatz kommen.

Die gasdurchlässige Lage kann aus Kunststoff hergestellt sein.

Zusammenfassend hat das erfindungsgemäße Verfahren zum einen den Vorteil der nötigen Genauigkeit, da Leckagen mit Größen von weniger als 3 bis 5 µm erkannt werden können, und zum anderen wird der zu testende flexible Behälter mechanisch weniger belastet, was das Risiko von durch die Überprüfung eingeführten Leckagen verringert.

Das Befüllen des Behälters mit dem Edelgas kann vor, während oder nach dem Evakuieren des Beutels geschehen.

Geschützt werden soll außerdem die Verwendung eines Sets aus einem flexiblen Behälter für ein Fluid, insbesondere für ein fluides Arzneimittel, und einem Gasdruckbehälter zur Aufnahme eines Edelgases bei einem erfindungsgemäßen Verfahren. Auch dies verringert die Notwendigkeit aufwendiger Laboreinrichtungen am Überprüfungsort, da entsprechendes Edelgas direkt mit dem flexiblen Behälter mitgeliefert wird. Durch dieses Vorkonfektionieren des flexiblen Behälters zusammen mit dem Gasdruckbehälter können außerdem Fehlerquellen beim Durchführen der Überprüfung eliminiert werden, die beim Befüllen des Behälters mit Edelgas leicht entstehen können. Beispielsweise durch Beaufschlagung mit einem zu großen Druck oder unkorrektes Anschließen einer äußeren Druckquelle an den Behälter (beispielsweise weil Anschlüsse nicht genau genug zueinander passen oder dergleichen).

Dabei weist der Behälter eine Öffnung auf, die im Wesentlichen gasdicht (das Austreten kleinerer Fluidmengen nach dem Verschließen kann je nach Anwendung akzeptabel sein) verschließbar ist und die so ausgebildet ist, dass darüber eine nach außen hin gasdichte Fluidverbindung zwischen dem Behälter und dem Gasdruckbehälter hergestellt werden kann.

Durch die Erfindung wird es auch möglich, den Behälter samt Anbauteile, wie Schläuche, Verbinder, Ventile und dergleichen, zu testen.

Es können mehr als eine Beutelöffnung vorgesehen sein, wobei durch geschickte Platzierung am Beutel, bspw. auf gegenüberliegenden Seiten, für das Edelgas möglichst kurze Wege zu einem Detektor erreicht werden können.

Der Behälter kann beispielsweise aus Polyethylen, Ethylen-Vinylacetat, Fluorpolymeren oder Gemische daraus bestehen.

Weitere vorteilhafte Ausführungsformen der Erfindung sind in den abhängigen Ansprüchen definiert.

Das Befüllen des Behälters kann, wie erwähnt, geschehen, indem der Behälter über eine Öffnung mit einem mit dem Edelgas befüllten Gasdruckbehälter in - vorzugsweise nach außen gasdichte - Fluidverbindung gebracht wird.

In einer ganz besonders bevorzugten Ausführungsform kann der Gasdruckbehälter vor dem Evakuieren - vorzugsweise vollständig - innerhalb des im Wesentlichen gasdichten Beutels angeordnet werden. Dadurch müssen keine Schläuche nach außen aus dem Beutel geführt werden, deren Ränder nach außen aufwändig abgedichtet werden müssten. Außerdem erlaubt dies eine besonders einfache Verfahrensdurchführung. Das Aktivieren des Gasdruckbehälters kann dabei kontaktlos über jedwede Art elektromagnetischer Wellen funktionieren. Da der im Wesentlichen gasdichte Beutel auch flexibel bzw. elastisch sein kann, könnte das Befüllen des Behälters mit Edelgas auch durch einen durch den Beutel betätigten Schalter am Gasdruckbehälter ausgelöst werden.

Ganz besonders bevorzugt kann auch eine Ausführungsform sein, bei welcher der Vorgang des Herstellens der Fluidverbindung zwischen dem Gasdruckbehälter und dem Behälter automatisch mechanisch erfolgt.

Anders ausgedrückt, können durch das vollständige Anordnen des Gasdruckbehälters innerhalb des Beutels die im Stand der Technik notwendigen Durchführungen für Schläuche von einer Heliumquelle in die Prüfkammer und das dadurch verursachte zusätzliche Risiko für die Dichtheit vermieden werden.

Als Edelgas kann bevorzugt Helium eingesetzt werden, da dieses von den Edelgasen das kleinste Molekulargewicht aufweist und daher - sofern davon bei den entsprechenden Größenskalen davon gesprochen werden kann - die kleinsten "Abmessungen" aufweist. Dadurch können kleinstmögliche Löcher bzw. Leckagen im Behälter entdeckt werden (da größere Edelgasatome unter Umständen nicht durch die entsprechenden Löcher hindurchtreten könnten).

Der Messgenauigkeit kann es zuträglich sein, wenn der im Wesentlichen gasdichte Beutel durch ständiges Abpumpen evakuiert gehalten wird. Das heißt, das Abpumpen kann erst dann eingestellt werden, wenn von der Detektionsvorrichtung ein repräsentatives Signal vorhanden ist. Natürlich ist es auch möglich, das Abpumpen beispielsweise gepulst durchzuführen oder auf andere Weise gesteuert oder geregelt, um beispielsweise Energie einzusparen.

Zur Detektion des Vorhandenseins des über die Beutelöffnung austretenden Edelgases können beispielsweise Massenspektrometer als Detektoren eingesetzt werden.

Das Fluid kann bevorzugt ein fluides Arzneimittel sein. Die Erfindung kann aber auch bei ähnlich wertvollen Produkten, wie beispielsweise Vorprodukten von Arzneimitteln und anderen Stoffen, die beim (bio-)pharmazeutischen Produktionsprozess auftreten, eingesetzt werden, wobei die Dichtheit des Behälters auch auf sehr kleinen Skalen wichtig ist. Das Fluid kann außerdem bevorzugt eine Flüssigkeit sein. In einer ganz bevorzugten Ausführungsform kann das Fluid ein flüssiges Arzneimittel sein.

Der flexible Behälter kann - vorzugsweise genau einmal - zur Lagerung und/oder zum Transport eines fluiden Arzneimittels verwendet werden, falls bei der Überprüfung kein Leck detektiert wurde. Danach kann der Behälter entsorgt werden. In diesem Fall spricht man von sogenannten Single-Use-Bags.

Besonders effektiv kann das Verfahren bei solchen Behältern eingesetzt werden, die so flexibel sind, dass sie ohne Anwendung eines Unterdrucks im Wesentlichen vollständig entleert werden können.

Hinsichtlich des Sets kann der Gasdruckbehälter über die verschließbare Öffnung mit dem Behälter in Verbindung stehen, wobei vorzugsweise eine Schlauch- und/oder Rohrverbindung vorhanden ist.

Es kann besonders bevorzugt vorgesehen sein, dass der Gasdruckbehälter relativ klein ist. Das heißt insbesondere, dass sein Fassungsvermögen so ist, dass eine Menge des Edelgases, das der Gasdruckbehälter speichert, bei Normalbedingungen, das heißt bei Umgebungsdruck, ein Zweifaches des nominellen Fassungsvermögens des Behälters nicht übersteigt. Besonders bevorzugt kann das Fassungsvermögen so sein, dass dieses Volumen das nominelle Fassungsvolumen des Behälters und ganz besonders bevorzugt drei Viertel und insbesondere die Hälfte des nominellen Fassungsvolumens nicht übersteigt.

Weitere Vorteile und Einzelheiten der Erfindung ergeben sich anhand der Figuren sowie der dazugehörigen Figurenbeschreibung. Dabei zeigen:
- Fig. 1: eine schematische Darstellung des Versuchsaufbaus für die Durchführung des erfindungsgemäßen Verfahrens und
- Fig. 2a und 2b: schematische Abbildungen des erfindungsgemäßen Sets sowie des erfindungsgemäßen Sets nach der Bedeckung mit der gasdurchlässigen Lage.

Bei einer Ausführungsform des erfindungsgemäßen Verfahrens wird Helium als das Edelgas eingesetzt.

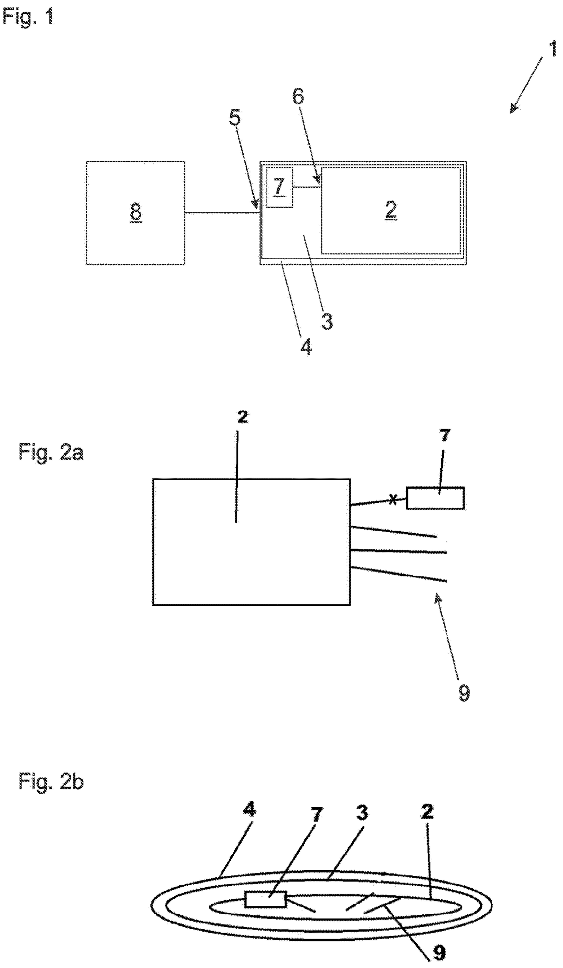

Der Versuchsaufbau ist in Fig. 1 rein schematisch dargestellt und kann so kompakt ausgeführt werden, dass die Überprüfung der Dichtheit auch am Ort der Befüllung des Behälters 2 zuverlässig durchgeführt werden kann. Der Behälter 2 ist flexibel und beispielsweise wie in Fig. 2a schematisch dargestellt ausgebildet. Dieser ist zumindest teilweise - vorzugsweise vollständig - mit der gasdurchlässigen Lage 3 ummantelt.

Der Behälter 2 liegt im Set mit dem Gasdruckbehälter 7 vor. Der Gasdruckbehälter 7 ist über eine Schlauchverbindung und die Öffnung 6 am Behälter 2 mit dem Behälter 2 verbunden. Die Öffnung 6 ist gasdicht verschließbar und in der Fig. 1 nur schematisch als Kreuzungspunkt der Schlauchverbindung mit dem Behälter 2 angedeutet.

Der Behälter 2 ist vollständig durch die gasdurchlässige Lage 3 ummantelt, wobei die gasdurchlässige Lage 3 in diesem Ausführungsbeispiel als Vlies ausgeführt ist. Der mit der gasdurchlässigen Lage 3 ummantelte Behälter 2 ist samt der Schlauchverbindung und dem Gasdruckbehälter 7 im im Wesentlichen gasdichten Beutel 4 angeordnet. Über die Beutelöffnung 5 (ebenfalls nur schematisch als Schnittpunkt zwischen dem Beutel 4 und einer Verbindung des Detektors 8 mit dem Beutel 4 dargestellt) ist das Innere des Beutels 4 mit dem Detektor 8 verbunden. Das Detektor 8 umfasst in diesem Fall auch eine Vakuumpumpe zum evakuieren des Beutels 4 sowie die vollständige, notwendige Hard- und Software zum Detektieren von Helium im Gasstrom, der durch das Evakuieren entsteht.

Die gasdurchlässige Lage 3 reduziert beim Evakuieren etwaige zerstörerische Kräfte auf den Behälter 2. Gleichzeitig erlaubt die gasdurchlässige Lage 3 auch im evakuierten Zustand des äußeren Beutels 4 die Migration von aus einem Leck des Behälter 2 austretendem Helium bis zur Beutelöffnung 5. Von der Beutelöffnung 5 kann das ausgetretene Helium in Richtung des Detektors 8 abgepumpt werden. In anderen Worten ausgedrückt, verhindert die gasdurchlässige Lage 3, dass der äußere Beutel 4 beim Evakuieren etwaige Löcher des Behälters 2 abdichtet.

Die Beutelöffnung 5 kann im Messaufbau in mehrfacher Ausführung (am Behälter 2) vorhanden sein, zum Beispiel an gegenüberliegenden Seiten des Behälters 2. Dadurch können sich für ausgetretenes Helium möglichst kurze Wege zum Detektor 8 ergeben.

Natürlich muss der Behälter 2 vor der Detektion mit Edelgas aus dem Gasdruckbehälter 7 befüllt werden. Dies kann entweder vor, währenddessen oder nach dem Evakuieren geschehen. Beim Befüllen nach dem Evakuieren muss die Öffnung 6 entsprechend geöffnet werden, was beispielsweise berührungslos durch Übertragung elektromagnetischer Wellen funktionieren kann.

Der Gasdruckbehälter 7 ist in diesem Ausführungsbeispiel so dimensioniert, dass nach dem Öffnen der Öffnung 6 das Edelgas (Helium) etwa die Hälfte des Nennvolumens des Behälters 2 einnimmt (bei etwa 1 Bar Umgebungsdruck). (Es ergibt sich also ein Differenzdruck zwischen dem Inneren des Behälters 2 und dem Zwischenraum zwischen Behälter 2 und dem im Wesentlichen gasdichten Beutel 4 von etwa 1 Bar, da der Zwischenraum ja evakuiert wird.)

Ein Beispiel für ein Set, das erfindungsgemäß verwendet werden kann, das aus dem flexiblen Behälter 2 und dem Gasdruckbehälter besteht, ist fotografisch in Fig. 2a dargestellt.

Dabei ist zu erkennen, wie der Gasdruckbehälter 7 über einen kleinen (schwarzen) Schlauch mit dem Behälter 2 verbunden ist. Die Öffnung des Behälters 2 ist verschließbar, wobei der Verschlussmechanismus in diesem Ausführungsbeispiel dem Gasdruckbehälter 7 zugeordnet bzw. in diesem angeordnet ist. Der Behälter 2 verfügt noch über weitere Anschlüsse, die auf der rechten Seite des Bildes zu erkennen sind und beispielsweise dem Befüllen und Entleeren des Behälters 2 dienen.

Der in Fig. 2a dargestellte beispielhafte Behälter 2 ist als sogenannter Single-Use-Bag ausgeführt, d. h. er ist nach einmaliger Verwendung zur Entsorgung gedacht. Derartige Behälter können ein nominelles Fassungsvolumen von beispielsweise 10 Litern aufweisen.

In Fig. 2b ist der Behälter 2 zusammen mit dem Gasdruckbehälter 7 im vollständig von der gasdurchlässigen Lage 3 ummantelten bzw. umgebenen und innerhalb des Beutels 4 angeordneten Zustand dargestellt. Nach dem Verschließen des Beutels 4 liegt die Anordnung, wie in Fig. 2b dargestellt, vor. (Der Detektor 8 ist in Fig. 2b nicht dargestellt.) Es sei darauf hingewiesen, dass im evakuierten Zustand natürlich im Regelfall kein Abstand mehr zwischen der gasdurchlässigen Lage 3 und jeweils dem Behälter 2 und dem Beutel 4 bestehen wird. In Figur 2b sind diese Abstände nur der Übersichtlichkeit halber dargestellt.

Der Gasdruckbehälter kann dann eine definierte Menge an Helium in den Behälter 2 abgeben. Hierfür kann beispielsweise ein spezielles Ventil zum Einsatz kommen. Der Gasdruckbehälter 7 (auch genannt "Heliumapplikator") ist im vorliegenden Fall auch für die einmalige Verwendung gedacht, kann aber natürlich auch zur Wiederverwendung ausgebildet sein.

Beim Befüllen des Behälters 2 mit dem Helium aus dem Gasdruckbehälter 7 besteht eine nach außen hin (d. h. zum Zwischenraum zwischen Behälter 2 und Beutel 4) gasdichte Fluidverbindung zwischen dem Gasdruckbehälter und dem Inneren des Behälters 2.

Durch die relativ kleine Menge an Helium wird ein Überdruck (d. h. ein über das normale Umgebungsdruckniveau von 1 Bar) weit hinausgehender Druck im Behälter 2 vermieden.

Wie bereits erwähnt, kann das Evakuieren vor oder nach dem Einbringen des Heliums in den Behälter 2 geschehen. Eine zu lange Wartezeit zwischen dem Befüllen des Behälters 2 und der Detektion des Heliums durch den Detektor 8 sollte jedoch nicht verstreichen, da ansonsten eine Diffusion des Heliums durch den Behälter 2 das Messergebnis verfälschen kann.

Jedenfalls wird auf ein Leck im Behälter 2 geschlossen, falls die Menge des vom Detektor 8 detektieren Heliums einen gewissen Grenzwert überschreitet.

Ein weiterer Vorteil der Verwendung der gasdurchlässigen Lage kann darin liegen, dass das zu evakuierende Volumen im Wesentlichen gasdichten Beutel 4 kleiner ist, wodurch sich das Verhältnis des Heliums (wenn ein Leck vorhanden ist) zur Umgebungsluft vergrößert.

Ob ein Leck vorliegt (weil beispielsweise der Grenzwert überschritten wurde) oder nicht, kann beispielsweise über eine Benutzerschnittstelle am Detektor 8 ausgegeben werden.

Insgesamt kann die Erfindung für eine geringere mechanische Belastung des zu überprüfenden Behälters 2 sorgen, was das Sicherheitsrisiko und den Testaufwand verringert.

## Patentansprüche

1. Verfahren zum Überprüfen einer Dichtheit eines flexiblen Behälters (2) für ein Fluid, insbesondere ein fluides Arzneimittel, wobei
- das Verfahren an einem aus zwei randseitig verschweißten, flexiblen Kunststofflagen bestehenden, vollständig entleerten Behälter (2) durchgeführt wird,
- der Behälter (2) zumindest teilweise - vorzugsweise vollständig - mit einer gasdurchlässigen Lage (3) bedeckt wird,
- der Behälter (2) samt gasdurchlässiger Lage (3) in einem flexiblen, im Wesentlichen gasdichten Beutel (4) angeordnet wird,
- der im Wesentlichen gasdichte Beutel (4) durch Abpumpen über eine Beutelöffnung (5) evakuiert wird,
- der Behälter (2) mit einem Edelgas befüllt wird, und
- das Vorhandensein von Edelgas, welches über ein Leck aus dem Behälter (2) durch die gasdurchlässige Lage (3) über die Beutelöffnung (5) austritt, detektiert wird.

2. Verfahren nach Anspruch 1, **dadurch gekennzeichnet, dass** das Befüllen des Behälters (2) geschieht, indem der Behälter (2) über eine Öffnung (6) mit einem mit dem Edelgas befüllten Gasdruckbehälter (7) in Fluidverbindung gebracht wird.

3. Verfahren nach Anspruch 2, **dadurch gekennzeichnet, dass** der Gasdruckbehälter (7) vor dem Evakuieren - vorzugsweise vollständig - innerhalb des im Wesentlichen gasdichten Beutels (4) angeordnet wird.

4. Verfahren nach einem der vorhergehenden Ansprüche, **dadurch gekennzeichnet, dass** als Edelgas Helium verwendet wird.

5. Verfahren nach einem der vorhergehenden Ansprüche, **dadurch gekennzeichnet, dass** der im Wesentlichen gasdichte Beutel (4) durch ständiges Abpumpen evakuiert gehalten wird.

6. Verfahren nach einem der vorhergehenden Ansprüche, **dadurch gekennzeichnet, dass** zur Detektion des Vorhandenseins des über die Beutelöffnung austretenden Edelgases ein Detektor (8) eingesetzt wird.

7. Verfahren nach einem der vorhergehenden Ansprüche, **dadurch gekennzeichnet, dass** der flexible Behälter (2) - vorzugsweise genau einmal - zur Lagerung und/oder zum Transport eines Fluides - vorzugsweise eines flüssigen Arzneimittels - verwendet wird, falls eine Menge des aus der Beutelöffnung (5) austretenden, detektierten Edelgases einen Schwellwert nicht überschreitet.

8. Verfahren nach Anspruch 7, **dadurch gekennzeichnet, dass** der Behälter (2) nach der Verwendung zur Lagerung und/oder zum Transport des Fluides entsorgt wird.

9. Verwendung eines Sets aus
- einem aus zwei randseitig verschweißten, flexiblen Kunststofflagen bestehenden flexiblen Behälter (2) für ein Fluid, insbesondere ein fluides Arzneimittel, und
- einem Gasdruckbehälter (7) zur Aufnahme eines Edelgases, bei einem Verfahren nach einem der Ansprüche 1 bis 8, wobei der Behälter (2) eine Öffnung (6) aufweist, die im Wesentlichen gasdicht verschließbar ist und die so ausgebildet ist, dass darüber eine nach außen hin gasdichte Fluidverbindung zwischen dem Behälter (2) und dem Gasdruckbehälter (7) hergestellt werden kann.

10. Verwendung nach Anspruch 9, **dadurch gekennzeichnet, dass** der Gasdruckbehälter (7) über die verschließbare Öffnung (6) mit dem Behälter in Verbindung steht, wobei vorzugsweise eine Schlauch- und/oder Rohrverbindung vorhanden ist.

11. Verwendung nach Anspruch 9 oder 10, **dadurch gekennzeichnet, dass** ein nominelles Fassungsvermögen des Gasdruckbehälters (7) so ist, dass ein bei Umgebungsdruck vorliegendes Volumen des Edelgases ein Zweifaches eines nominellen Fassungsvolumens des Behälters (2) nicht übersteigt.

12. Verwendung nach Anspruch 11, **dadurch gekennzeichnet, dass** ein nominelles Fassungsvermögen des Gasdruckbehälters (7) so ist, dass ein bei Umgebungsdruck vorliegendes Volumen des Edelgases das Fassungsvolumen des Behälters (2) nicht übersteigt.

13. Verwendung nach Anspruch 12, **dadurch gekennzeichnet, dass** ein nominelles Fassungsvermögen des Gasdruckbehälters (7) so ist, dass ein bei Umgebungsdruck vorliegendes Volumen des Edelgases drei Viertel - bevorzugt die Hälfte - des nominellen Fassungsvolumens des Behälters (2) nicht übersteigt.

14. Verwendung nach einem der Ansprüche 9 bis 13, **dadurch gekennzeichnet, dass** Behälter (2) so flexibel ist, dass er ohne Anwendung eines Unterdrucks im Wesentlichen vollständig entleert werden kann.

## Claims

1. A method for inspecting a seal of a flexible container (2) for a fluid, in particular a fluid medicine, wherein
- the method is carried out on a completely empty container (2) consisting of two flexible plastic layers welded together at the edges,
- the container (2) is at least partially - preferably completely - covered with a gas-permeable layer (3),
- the container (2) including the gas-permeable layer (3) is disposed in a flexible essentially gas-tight bag (4),
- the essentially gas-tight bag (4) is evacuated by pumping out via a bag opening (5),
- the container (2) is filled with a noble gas, and
- the presence of noble gas which escapes via a leak from the container (2) through the gas-permeable layer (3) via the bag opening (5) is detected.

2. The method as claimed in claim 1, **characterized in that** the container (2) is filled by bringing the container (2) into fluid connection with a pressurised gas container (7) filled with the noble gas via an opening (6).

3. The method as claimed in claim 2, **characterized in that** prior to evacuation, the pressurised gas container (7) is disposed - preferably in its entirety - inside the essentially gas-tight bag (4).

4. The method as claimed in one of the preceding claims, **characterized in that** the helium is used as noble gas.

5. The method as claimed in one of the preceding claims, **characterized in that** the essentially gas-tight bag (4) is kept evacuated by being continuously pumped out.

6. The method as claimed in one of the preceding claims, **characterized in that** a detector (8) is used in order to detect the presence of the noble gas escaping via the bag opening.

7. The method as claimed in one of the preceding claims, **characterized in that** the flexible container (2) - preferably once and once only - is used for the storage and/or transport of a fluid - preferably a fluid medicine, as long as a quantity of the detected noble gas escaping from the bag opening (5) does not exceed a threshold value.

8. The method as claimed in claim 7, **characterized in that** the container (2) is disposed of after use for storage and/or for transport of fluid.

9. Use of a set formed by
- a flexible container (2) consisting of two flexible plastic layers welded together at the edges for a fluid, in particular for a fluid medicine, and
- a pressurised gas container (7) to accommodate a noble gas, for a method according to the claims 1 to 8, wherein the container (2) comprises an opening (6) which can essentially be sealed in a gas-tight manner and which is configured in a manner such that a fluid connection between the container (2) and the pressurised gas container (7) which is gas-tight to the outside can be produced.

10. The set as claimed in claim 9, **characterized in that** the pressurised gas container (7) is connected to the container via the sealable opening (6), wherein preferably, a tube and/or pipe connection is provided.

11. The set as claimed in claim 9 or claim 10, **characterized in that** a nominal capacity of the pressurised gas container (7) is such that a volume of the noble gas present at atmospheric pressure does not exceed twice a nominal capacity of the container (2).

12. The set as claimed in claim 11, **characterized in that** a nominal capacity of the pressurised gas container (7) is such that a volume of the noble gas present at atmospheric pressure does not exceed the volume capacity of the container (2).

13. The set as claimed in claim 12, **characterized in that** a nominal capacity of the pressurised gas container (7) is such that a volume of the noble gas present at atmospheric pressure does not exceed three quarters - preferably half - of the nominal volume capacity of the container (2).

14. The set as claimed in one of claims 9 to 13, **characterized in that** the container (2) is so flexible that it can essentially be completely emptied without the use of a reduced pressure.

## Revendications

1. Procédé de contrôle d'une étanchéité d'un contenant flexible (2) pour un liquide, en particulier un médicament liquide, dans lequel
- le procédé est effectué sur un contenant (2) complètement vidangé qui consiste en deux couches en matière plastique flexibles, soudées sur les bords,
- le contenant (2) est recouvert au moins en partie, de préférence entièrement, d'une couche (3) perméable au gaz,
- le contenant (2), ainsi que la couche (3) perméable au gaz, est agencé dans une poche (4) flexible, sensiblement étanche aux gaz,
- la poche (4) sensiblement étanche aux gaz est évacuée par pompage par le biais d'une ouverture de poche (5),
- le contenant (2) est rempli d'un gaz noble, et
- la présence de gaz noble, lequel sort du contenant (2) par le biais d'une fuite à travers la couche perméable au gaz (3) par l'ouverture de poche (5), est détectée.

2. Procédé selon la revendication 1, **caractérisé en ce que** le remplissage du contenant (2) se produit, le contenant (2) étant amené, par le biais d'une ouverture (6), en raccordement fluide avec un conteneur de gaz sous pression (7) rempli du gaz noble.

3. Procédé selon la revendication 2, **caractérisé en ce que** le conteneur de gaz sous pression (7) est, avant l'évacuation, agencé à l'intérieur de la poche (4) sensiblement étanche aux gaz, de préférence entièrement.

4. Procédé selon l'une des revendications précédentes, **caractérisé en ce que** l'hélium est utilisé comme gaz noble.

5. Procédé selon l'une des revendications précédentes, **caractérisé en ce que** la poche (4) sensiblement étanche aux gaz est maintenue évacuée par pompage continu.

6. Procédé selon l'une des revendications précédentes, **caractérisé en ce qu'**un détecteur (8) est utilisé pour la détection de la présence du gaz noble sortant par le biais de l'ouverture de poche.

7. Procédé selon l'une des revendications précédentes, **caractérisé en ce que** le contenant flexible (2) est utilisé, de préférence exactement une fois, pour le stockage et/ou pour le transport d'un liquide, de préférence un médicament liquide, au cas où une quantité détectée de gaz noble sortant de l'ouverture de poche (5) ne dépasse pas une valeur de seuil.

8. Procédé selon la revendication 7, **caractérisé en ce que** le contenant (2) est éliminé après utilisation pour le stockage et/ou pour le transport du liquide.

9. Utilisation d'un ensemble constitué
- d'un contenant flexible (2) qui consiste en deux couches en matière plastique flexibles, soudées sur les bords, pour un liquide, en particulier un médicament liquide, et
- d'un conteneur de gaz sous pression (7) permettant de recevoir un gaz noble,
lors d'un procédé selon l'une des revendications 1 à 8, dans laquelle le contenant (2) comporte une ouverture (6), laquelle peut être fermée de manière sensiblement étanche au gaz et est réalisée de sorte que par son biais un raccordement fluide étanche aux gaz vers l'extérieur peut être établi entre le contenant (2) et le conteneur de gaz sous pression (7).

10. Utilisation selon la revendication 9, **caractérisée en ce que** le conteneur de gaz sous pression (7) est en raccordement avec le contenant par le biais de l'ouverture pouvant être fermée (6), dans laquelle de préférence un raccordement par tuyau et/ou par tube est présent.

11. Utilisation selon la revendication 9 ou 10, **caractérisée en ce qu'**une capacité nominale du conteneur de gaz sous pression (7) est telle qu'un volume de gaz noble se trouvant à la pression ambiante n'excède pas le double d'une capacité nominale du contenant (2).

12. Utilisation selon la revendication 11, **caractérisée en ce qu'**une capacité nominale du conteneur de gaz sous pression (7) est telle qu'un volume de gaz noble se trouvant à la pression ambiante n'excède pas la capacité du contenant (2).

13. Utilisation selon la revendication 12, **caractérisée en ce qu'**une capacité nominale du conteneur de gaz sous pression (7) est telle qu'un volume de gaz noble se trouvant à la pression ambiante n'excède pas trois quarts, de préférence la moitié, de la capacité nominale du contenant (2).

14. Utilisation selon l'une des revendications 9 à 13, **caractérisée en ce que** le contenant (2) est flexible de telle sorte qu'il peut être vidangé sensiblement entièrement sans application d'une dépression.
